# EUROPEAN PATENT SPECIFICATION

(11) **EP 0 479 548 B1**
(45) Date of publication and mention of the grant of the patent: **28.06.1995**
(21) Application number: 91308971.0
(22) Date of filing: 01.10.1991
(51) Int. Cl.: F16F 1/38

(54) **Shock dampening mount**
Stossdämpfendes Lager
Support amortissant les chocs

(30) Priority: 01.10.1990 US 590726
(43) Date of publication of application: 08.04.1992
(73) Proprietor: GENCORP INC., Fairlawn, Ohio 44333-3300 (US)
(72) Inventor: Hampton, Bradley G., Tipton, Indiana 46072 (US); Hein, Richard D., Wabash, Indiana 46992 (US)
(74) Representative: Stoner, Gerard Patrick

(56) References cited:
- DE-A- 1 525 131
- DE-A- 3 036 418
- GB-A- 1 206 895
- GB-A- 2 008 714
- GB-A- 2 140 123

## Description

This invention relates to shock dampening mounts which employ resilient elastomeric cushions, in particular to mounts that are suitable to be interposed between a shock absorber and an automobile frame.

Two important parameters for designing such a mount are, I) a low axial rate of shock absorption to control noise and vibration entering the passenger compartment and II) a high radial rate of shock absorption to provide better vehicle handling. The invention was designed with this purpose in mind.

In the prior art, GB-A-2140123 describes a compliance device for a joint between a vehicle stabiliser bar and a front wheel track control. A pair of annular rubber vibration insulators are held between inner and outer sleeves, the inner sleeves being clamped onto the end of the stabiliser bar abutting one another. The outer sleeves are axially-short angle-section rings which fit over the edges of the opening in the track control arm to locate the rubber pieces axially. The rubber of the pieces extends in axially beyond these outer metal rings to contact from either side an annular metal flange which projects in around the aperture in the control arm.

GB-A-2008714 describes a vibration-absorbing fitting for connection between a vehicle body and wheel control arm to correct oversteer. The device has a pair of annular rubber elements each held between inner and outer sleeves. The outer sleeves contact one another directly. The rubber elements are made with asymmetric end recesses so that a relative axial displacement tends to produce a relative radial movement between the inner and outer elements.

DE-A-1525131 describes a vibration-absorbing bushing comprising two fittings clamped end-to-end on the end of a metal bolt attachment, each fitting having a long inner metal sleeve and a short outer metal ring at one end; the ring is to provide axial location at the edges of a surrounding housing sleeve. The abutting ends of the two elastomeric portions are pressed together by precompression of the rubber elements.

The present invention provides a shock absorbing mount for absorbing shocks between a shock absorber and a hollow cylindrical housing of an automobile frame, the housing having a cylindrical metal side wall and first and second open ends, the mount comprising first and second resilient fittings disposed in end-to-end concentric relation in the cylindrical housing, each of the resilient fittings having
a cylindrical metal inner sleeve secured to move with the shock absorber, a cylindrical metal outer sleeve disposed around the inner sleeve and fitting into the cylindrical housing against the sidewall thereof, and an annular elastomer insert extending between the inner and outer sleeves;
the inner ends of the inner sleeves of the first and second resilient fittings abutting against one another axially;
the outer, distal ends of the outer sleeves having respective radially outwardly curving portions which extend out to engage axially the peripheries of the respective open ends of the cylindrical housing, to prevent axial movement of either of the resilient fittings towards the other within the cylindrical housing;
the inner, confronting end faces of the elastomer inserts having respective annular recesses which confront one another, and the outer, distal ends of the elastomer inserts having parts which curve outwardly to lie on the respective outwardly curving portions of the respective outer sleeves, wherein
the inner and outer sleeves of each of the resilient fittings are the same axial length as one another, the confronting inner ends of the outer sleeves being axially spaced from one another with the cylindrical side wall of the housing extending past that axial spacing;
and at the inner, confronting ends of the resilient fittings the elastomer material of each elastomer insert terminates adjacent the ends of the corresponding inner and outer sleeves without extending beyond them.

The elastomer portions provide a relatively low axial spring constant compared with the radial spring constant for movement between the two connected components.

This is achieved by the annular recesses in the elastomeric portions to adjust their response. The recess conformation is an annular channel such that the channel base forms a web with relatively low resistance to axial deflection. The channel walls give a hard response once radial deflection is sufficient to bring them together.

A limiting stop may be provided at one or both axial ends of the mount, to limit the possible degree of relative axial movement. Desirably the stop involves a rigid part abutting on an elastomeric part, which may conveniently be the outwardly curving parts at the outer ends of the elastomeric inserts.

Each elastomeric portion can be provided separately as part of a press fitting, having the elastomeric annulus between the inner and outer rigid sleeves. The outer sleeve is fixed into an outer housing sleeve by press fitting, and the inner sleeve ring is fixed to or forms part of the inner rigid element.

Because of their simplicity of design, the parts are easily assembled and relatively inexpensive to manufacture. Also the parts can be tuned to different shock absorption rates by changing the elastomers of the inserts, or the voids in the inserts, or the geometric shape of the metal sleeves surrounding the inserts.

An embodiment of the invention is now described as an example, with reference to the accompanying drawing wherein:
Fig. 1 is an assembly drawing of a shock absorber mount, the two main parts of the mount being shown in cross-section; and

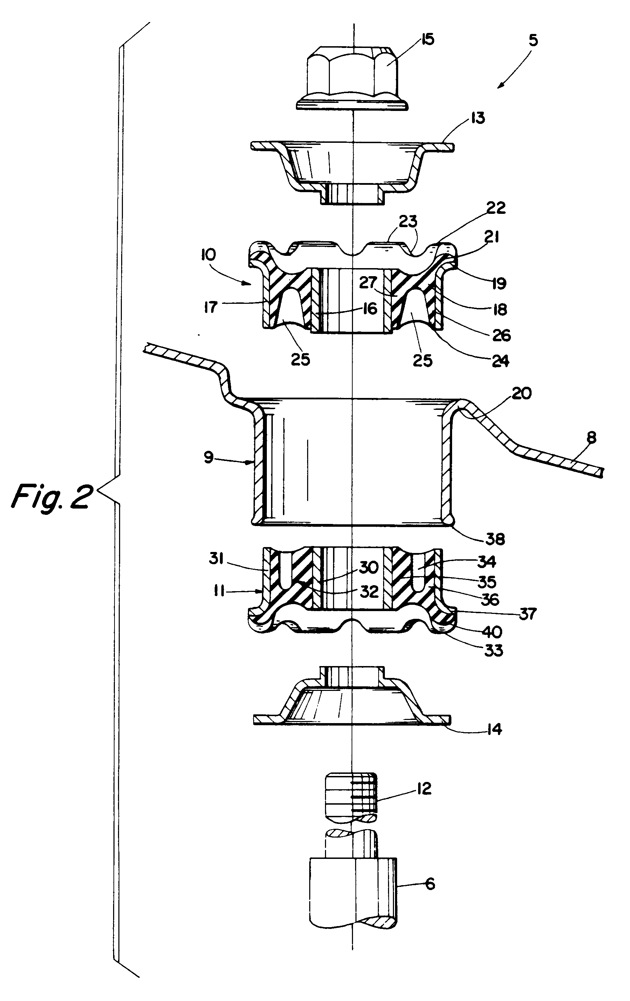

Fig. 2 is an exploded view of the mount, showing the parts in cross-section.

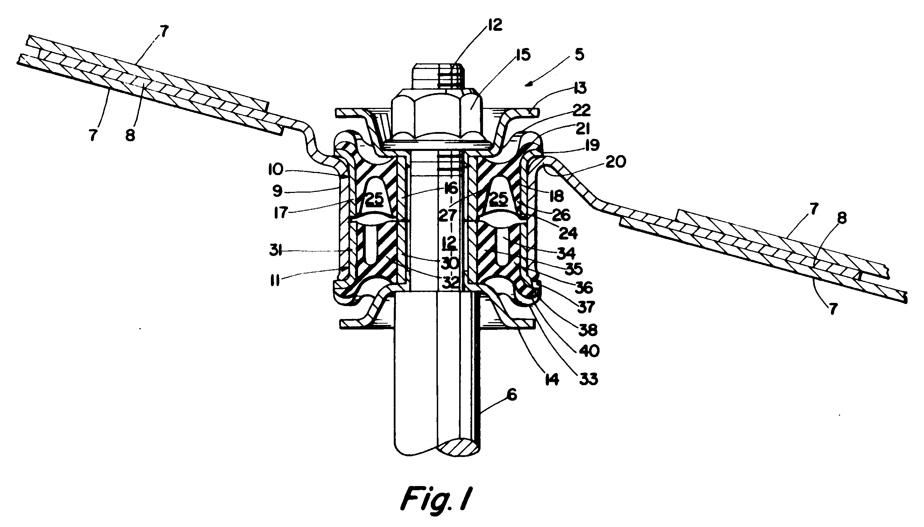

With reference to the drawing, there is shown a shock absorbing mount 5 for securing a conventional shock absorber 6 to an automobile frame 7. The mount 5, when assembled as in Fig. 1, comprises a metal mounting plate 8 which is secured to the adjacent automobile frame 7, the plate 8 having a vertically disposed, hollow cylindrical housing 9 in which are fixed by press-fitting upper and lower fittings 10, 11, which surround the upper shaft 12 of the shock absorber 6, and which are held there in the housing by a pair of vertically spaced metal washers 13, 14 and lock nut 15.

The upper pressed fitting 10 comprises a pair of concentrically disposed metal sleeves 16, 17 which are radially spaced by a resilient, annular insert 18 which is composed of any suitable resilient elastomeric material, e.g. rubber. The upper end 19 of the outer sleeve 17 is curved or flared outwardly to rest on the adjacent, upper curved end 20 of the housing 9 to limit travel of the upper fitting 10 in the direction of the lower fitting 11 on assembly. The upper, radially outermost end 21 of the rubber insert 18 is matingly curved to rest atop the outwardly curved flange 19 of the outer sleeve 17. An annular rubber collar 22, integral with the rubber insert 18, is formed atop the insert 18 and flange 21, and is provided with a corrugated outer end 23, for engaging the upper metal washer 13, depending on the transitional design parameters desired between the upper washer 13 and upper pressed fitting 10. The vertically lowermost end 24 of the rubber insert 18 is provided with an inwardly directed, annular void or cavity 25, the size and shape of which are depended on the shock absorbing characteristics desired. In this particular instance, the sidewalls 26, 27 of the insert 18 surrounding the annular cavity 25 are tapering and become thicker in the direction of the upper collar 22.

The lower pressed fitting 11 is similar, in design, to the upper pressed fitting 10 in that it has a pair of radially spaced inner and outer cylindrical metal sleeves 30, 31, between which is a lower rubber insert 32 which, likewise, has a corrugated outer rubber collar 33, and an annular void or cavity 34 which confronts the cavity 25 of the upper pressed fitting 10. The radially innermost sidewall 35 of the lower cavity 34 is substantially thicker, in this case, than the radially outermost sidewall 36 of the lower cavity 34. The lower end 37 of the lower outer sleeve 31 is also curved or flared outwardly to engage the adjacent lower circular end 38 of the metal housing 9. So too is the lower end 40 of the lower insert 32 matingly curved to rest against the flanged end 37 of the lower outer sleeve 31.

It can be appreciated by those skilled in the art, that the upper and lower-pressed fittings 10, 11 will coact to cushion or dampen axial and radial forces exerted against them. The dampening characteristics of these fittings can be tuned, as previously mentioned, by varying the composition of the resilient inserts, or by varying the size or shape of the cavities in the inserts, or by varying the configuration of the metal sleeeves of the fittings.

Thus, there has been described a unique shock absorbing mount which is comprised of a pair of pressed fittings with rubber inserts, which are mounted together in end-to-end abutting relation. Further, the rubber inserts are provided with confronting cavities which are sized and shaped in accordance with the cushioning or dampening characteristics desired.

## Claims

1. A shock absorbing mount for absorbing shocks between a shock absorber (6) and a hollow cylindrical housing (9) of an automobile frame (7,8), the housing (9) having a cylindrical metal side wall and first and second open ends, the mount comprising first and second resilient fittings (10,11) disposed in end-to-end concentric relation in the cylindrical housing (9), each of the resilient fittings (10,11) having
a cylindrical metal inner sleeve (16,30) secured to move with the shock absorber (6), a cylindrical metal outer sleeve (17,31) disposed around the inner sleeve and fitting into the cylindrical housing (9) against the sidewall thereof, and an annular elastomer insert (18,32) extending between the inner and outer sleeves;
the inner ends of the inner sleeves (16,30) of the first and second resilient fittings (10,11) abutting against one another axially;
the outer, distal ends of the outer sleeves (17,31) having respective radially outwardly curving portions (19,37) which extend out to engage axially the peripheries of the respective open ends of the cylindrical housing (9), to prevent axial movement of either of the resilient fittings (10,11) towards the other within the cylindrical housing (9);
the inner, confronting end faces of the elastomer inserts (18,32) having respective annular recesses (25,34) which confront one another, and the outer, distal ends of the elastomer inserts (18,32) having parts which curve outwardly to lie on the respective outwardly curving portions (19,37) of the respective outer sleeves (17,31), wherein
the inner and outer sleeves (16,17;30,31) of each of the resilient fittings (10,11) are the same axial length as one another, the confronting inner ends of the outer sleeves being axially spaced from one another with the cylindrical side wall of the housing (9) extending past that axial spacing;
and at the inner, confronting ends of the resilient fittings (10,11) the elastomer material of each elastomer insert (18,32) terminates adjacent the ends of the corresponding inner and outer sleeves (16,17;30,31) without extending beyond them.

2. A shock absorbing mount according to claim 1 in which the annular recess (25) of at least one of the elastomer inserts (18) has radially opposing sidewall portions (26,27) which converge in the direction away from the annular recess (34) of the other fitting.

3. A shock absorbing mount according to claim 2 in which the annular recess (34) of the other fitting (11) has side wall portions that are substantially parallel, with a substantially greater thickness of elastomer between the parallel-walled cavity (34) and the corresponding inner sleeve (30) than between the parallel-sided cavity (34) and the corresponding outer sleeve (31).

4. A shock absorbing mount according to any one of the preceding claims in which the portions of the elastomeric inserts (18,32) which lie on the outwardly curving portions (19,37) of the outer sleeve (17,31) are circumferentially corrugated.

5. A shock absorbing mount according to any one of the preceding claims in which the elastomer inserts are of rubber.

## Patentansprüche

1. Stoßdämpfende(r) Lagerung bzw. Träger zur Dämpfung von Stößen zwischen einem Stoßdämpfer (6) und einem hohlen zylindrischen Gehäuse (9) eines Autorahmens (7,8), wobei das Gehäuse (9) eine zylindrische Metallseitenwand und ein erstes und zweites offenes Ende aufweist, wobei die Lagerung ein erstes und zweites elastisches Paßstück (10,11) umfaßt, die in konzentrischer Ende-an-Ende-Beziehung im zylindrischen Gehäuse (9) angeordnet sind, wobei jedes der elastischen Paßstücke (10,11) aufweist:
eine zylindrische Metallinnenhülse (16,30), die so befestigt ist, daß sie sich mit dem Stoßdämpfer (6) bewegt, eine zylindrische Metallaußenhülse (17,31), die um die Innenhülse herum angeordnet und in das zylindrische Gehäuse (9) gegen dessen Seitenwand eingepaßt ist, und ein ringförmiger Elastomereinsatz (18,32) sich zwischen innerer und äußerer Hülse erstreckt;
wobei die inneren Enden der Innenhülsen (16,30) des ersten und zweiten elastischen Paßstücks (10,11) axial aneinander anliegen;
wobei die äußeren, distalen Enden der Außenhülsen (17,31) jeweilige radial nach außen gekrümmte Abschnitte (19,37) aufweisen, die sich heraus erstrecken, um axial an den Peripherien der jeweiligen offenen Enden des zylindrischen Gehäuses (9) anzugreifen, um eine axiale Bewegung der beiden elastischen Paßstücke (10,11) zueinander innerhalb des zylindrischen Gehäuses (9) zu verhindern;
wobei die inneren, einander gegenüberstehenden Endflächen der Elastomereinsätze (18,32) jeweilige ringförmige Ausnehmungen (25,34) aufweisen, die einander gegenüberstehen, und die äußeren distalen Enden der Elastomereinsätze (18,32) Teile aufweisen, die sich nach außen krümmen, um auf den jeweiligen nach außen gekrümmten Abschnitten (19,37) der jeweiligen Außenhülsen (17,31) zu liegen, worin die Innen- und Außenhülsen (16,17;30,31) jedes der elastischen Paßstücke (10,11) dieselbe axiale Länge wie die jeweils andere haben, die einander gegenüberstehenden Innenenden der Außenhülsen voneinander axial beabstandet sind, wobei sich die zylindrische Seitenwand des Gehäuses (9) an jenem axialen Abstand vorbei ersteckt;
und an den einander gegenüberstehenden Innenenden der elastischen Paßstücke (10,11) das Elastomermaterial jedes Elastomereinsatzes (18,32) nahe den Enden der korrespondierenden Innen- und Außenhülsen (16,17;30,31) endet, ohne sich über sie hinaus zu erstrecken.

2. Stoßdämpfende Lagerung nach Anspruch 1, worin die ringförmige Ausnehmung (25) von zumindest einem der Elastomereinsätze (18) radial gegenüberliegende Seitenwandabschnitte (26,27) aufweist, die in die Richtung weg von der ringförmigen Ausnehmung (34) des anderen Paßstücks zusammenlaufen.

3. Stoßdämpfende Lagerung nach Anspruch 2, worin die ringförmige Ausnehmung (34) des anderen Paßstücks (11) Seitenwandabschnitte aufweist, die im wesentlichen parallel sind, mit deutlich größerer Dicke des Elastomers zwischen der parallelwandigen Höhlung (34) und der korrespondierenden Innenhülse (30) als zwischen der parallelseitigen Höhlung (34) und der korrespondierenden Außenhülse (31).

4. Stoßdämpfende Lagerung nach einem der vorhergehenden Ansprüche, worin die Abschnitte des Elastomereinsatzes (18,32), die auf den nach außen gekrümmten Abschnitten (19,37) der Außenhülse (17,31) liegen, Umfangswellungen aufweisen.

5. Stoßdämpfende Lagerung nach einem der vorhergehenden Ansprüche, worin die Elastomereinsätze aus Gummi sind.

## Revendications

1. Support amortissant les chocs pour amortir les chocs entre un amortisseur de chocs (6) et un boîtier cylindrique creux (9) d'un châssis d'automobile (7,8), le boîtier (9) ayant une paroi latérale cylindrique en métal et des première et deuxième extrémités ouvertes, le support comprenant des première et deuxième garnitures élastiques (10,11) disposées suivant une relation concentrique bout-à-bout dans le boîtier cylindrique (9), chacune des garnitures élastiques (10,11) comportant:
un manchon intérieur cylindrique (16,30) en métal installé pour se déplacer avec l'amortisseur de chocs (6), un manchon extérieur cylindrique (17,31) en métal disposé autour du manchon intérieur et s'adaptant dans le boîtier cylindrique (9) contre la paroi latérale de celui-ci, et un insert annulaire (18,32) en élastomère s'étendant entre les manchons intérieur et extérieur;
les extrémités intérieures des manchons intérieurs (16,30) des première et deuxième garnitures élastiques (10,11) butant les unes contre les autres axialement;
les extrémités extérieures distales des manchons extérieurs (17,31) ayant des parties courbées respectivement radialement vers l'extérieur (19,37) qui s'étendent vers l'extérieur pour venir en prise axialement avec les périphéries des extrémités ouvertes respectives du boîtier cylindrique (9) pour empêcher un mouvement axial d'une des garnitures élastiques (10,11) vers l'autre dans le boîtier cylindrique (9);
les faces d'extrémité intérieures opposées des inserts en élastomère (18,32) ayant des évidements annulaires respectifs (25,34) opposés l'un à l'autre, et les extrémités extérieures distales des inserts en élastomère (18,32) ayant des parties qui sont courbées vers l'extérieur pour reposer sur des parties courbées respectivement vers l'extérieur (19,37) des manchons extérieurs respectifs (17,31), dans lequel
les manchons intérieurs et extérieurs (16,17; 30,31) de chacune des garnitures élastiques (10,11) sont de la même longueur axiale l'un et l'autre, les extrémités intérieures confrontées des manchons extérieurs étant axialement espacés l'une de l'autre, la paroi latérale cylindrique du boîtier (9) s'étendant au-delà de cet espacement axial;
et aux extrémités intérieures confrontées des garnitures élastiques (10,11), le matériau en élastomère de chaque insert en élastomère (18,32) se termine au voisinage des extrémités des manchons intérieurs et extérieurs correspondants (16,17; 30,31) sans s'étendre au-delà de celles-ci.

2. Support amortissant les chocs selon la revendication 1, dans lequel l'évidement annulaire (25) d'au moins l'un des inserts en élastomère (18) a des portions latérales (26, 27) radialement opposées qui convergent dans la direction au loin de l'évidement annulaire (34) de l'autre garniture.

3. Support amortissant les chocs selon la revendication 2, dans lequel l'évidement annulaire (34) de l'autre garniture (11) a des portions de paroi latérales qui sont sensiblement parallèles, l'élastomère étant d'une épaisseur sensiblement plus grande entre la cavité à parois parallèles (34) et le manchon intérieur correspondant (30) qu'entre la cavité à côtés parallèles (34) et le manchon extérieur correspondant (31).

4. Support amortissant les chocs selon l'une des revendications précédentes, dans lequel les portions des inserts en élastomère (18,32) qui reposent sur les portions courbées vers l'extérieur (19,37) du manchon extérieur (17,31) sont ondulées circonférentiellement.

5. Support amortissant les chocs selon l'une des revendications précédentes, dans lequel les inserts en élastomère sont en caoutchouc.
